# EUROPÄISCHE PATENTSCHRIFT

(11) **EP 1 430 204 B1**
(45) Veröffentlichungstag und Bekanntmachung des Hinweises auf die Patenterteilung: **26.01.2005**
(21) Anmeldenummer: 02776712.8
(22) Anmeldetag: 24.09.2002
(51) Int. Cl.: F01N 3/20, F04B 53/14

(54) **REDUKTIONSMITTELPUMPE FÜR EINE ABGASNACHBEHANDLUNGSANLAGE EINER BRENNKRAFTMASCHINE**
REDUCING AGENT PUMP FOR AN EXHAUST GAS POST-TREATMENT UNIT ON AN INTERNAL COMBUSTION ENGINE
POMPE A AGENTS DE REDUCTION POUR SYSTEME DE TRAITEMENT DE GAZ D'ECHAPPEMENT D'UN MOTEUR A COMBUSTION INTERNE

(30) Priorität: 25.09.2001 DE 10147172
(43) Veröffentlichungstag der Anmeldung: 23.06.2004
(73) Patentinhaber: Argillon GmbH, 96257 Redwitz (DE)
(72) Erfinder: LENKE, Sonja, 91073 Baiersdorf (DE)
(74) Vertreter: Dörr, Matthias
(86) Internationale Anmeldenummer: PCT/DE2002/003596
(87) Internationale Veröffentlichungsnummer: WO 2003/027454

(56) Entgegenhaltungen:
- US-A- 5 320 203

## Beschreibung

Reduktionsmittelpumpe für eine Abgasnachbehandlungsanlage einer Brennkraftmaschine

Die Erfindung betrifft eine Reduktionsmittelpumpe für eine Abgasnachbehandlungsanlage einer Brennkraftmaschine gemäß den Merkmalen des Patentanspruches 1.

Die Verminderung der Stickoxidemission einer mit Luftüberschuss arbeitenden Brennkraftmaschine, insbesondere einer Diesel-Brennkraftmaschine kann mit Hilfe der Selektiv-Catalytic-Reduction-Technologie (SCR) zu Luftstickstoff (N₂) und Wasserdampf (H₂O) erfolgen. Als Reduktionsmittel werden entweder gasförmiges Ammoniak (NH₃), Ammoniak in wässeriger Lösung oder Harnstoff in wässeriger Lösung eingesetzt. Der Harnstoff dient dabei als Ammoniakträger und wird mit Hilfe eines Dosiersystems vor einem Hydrolysekatalysator in das Auspuffsystem eingespritzt, dort mittels Hydrolyse zu Ammoniak umgewandelt, der dann wiederum in dem eigentlichen SCR- oder DENOX-Katalysator die Stickoxide reduziert.

Ein solches Dosiersystem weist als wesentliche Komponenten einen Reduktionsmittelbehälter, eine Pumpe, einen Druckkregler, einen Drucksensor und ein Dosierventil auf. Die Pumpe fördert das in dem Reduktionsmittelbehälter bevorratete Reduktionsmittel zu dem Dosierventil, mittels dessen das Reduktionsmittel in den Abgasstrom stromaufwärts des Hydrolysekatalysators eingespritzt wird. Das Dosierventil wird über Signale einer Steuereinrichtung derart angesteuert, daß abhängig von Betriebsparametern der Brennkraftmaschine eine bestimmte, aktuell nötige Menge an Reduktionsmittel zugeführt wird (DE 197 43 337 C1).

Es ist ein Vorteil der in wässerigen Lösungen vorliegenden ammoniakfreisetzenden Substanzen, wie z.B. Harnstoff, daß die Bevorratung, die Handhabung, die Förder-und Dosierbarkeit technisch relativ einfach zu lösen sind. Ein Nachteil dieser wässerigen Lösungen besteht darin, daß in Abhängigkeit der Konzentration der gelösten Substanz die Gefahr des Einfrierens bei bestimmten Temperaturen besteht.

32%ige Harnstofflösung, wie sie typischerweise in SCR-Systemen als Reduktionsmittel verwendet wird, weist einen Gefrierpunkt von -11° C auf. Deshalb müssen Vorrichtungen zum Heizen des Dosiersystems vorgesehen werden um die Funktionsfähigkeit aller Systemkomponenten nach einem Systemstart bei Umgebungstemperaturen unter -11°C in einer akzeptablen Zeit sicherzustellen und zu verhindern, daß Systemkomponenten während des Betriebs einfrieren.

Eine der Hauptkomponenten ist die Reduktionsmittelpumpe. Da wässerige Harnstofflösung wegen seiner Kriecheigenschaften hohe Anforderungen an die Dichtigkeit des Systems stellt, werden im Allgemeinen nur Pumpen ohne Wellendurchführungen, also nur mit statischen Dichtungen eingesetzt. Sowohl Membranpumpen, als auch Schwingkolbenpumpen erfüllen diese Vorraussetzung. Für die Dosierung von wässeriger Harnstofflösung als Reduktionsmittel zur Abgasnachbehandlung bei Brennkraftmaschinen werden bevorzugt elektromagnetisch angetriebene Schwingkolbenpumpen eingesetzt.

Ein Problem dieser Schwingkolbenpumpen ist dabei, dass in der Ruhelage des Pumpenkolbens prinzipiell ein Flüssigkeitsvolumen zwischen dem Kolbenrückschlagventil und dem Auslassrückschlagventil eingeschlossen ist. Dieses Flüssigkeitsvolumen ist abhängig von der konstruktiven Ausgestaltung der Pumpe, ist aber mindestens so groß wie der Hubraum des Pumpenkolbens. Wenn nun bei Temperaturen unterhalb des Gefrierpunktes des Reduktionsmittels das Reduktionsmittel im Pumpenauslass bereits gefroren ist, kann die Volumenzunahme des eingeschlossenen Reduktionsmittels nicht mehr ausgeglichen werden. Das Kolbenrückschlagventil läßt keinen Druckausgleich in Richtung des Reduktionsmittelbehälters zu und die Pumpe wird aufgrund des resultierenden Druckanstieges beschädigt.

Aus der DE 44 32 577 A1 ist eine Einrichtung zur Vermeidung von Frostschäden an Teilen einer nach dem Prinzip der selektiven katalytischen Reduktion arbeitenden AbgasreinigungsAnlage während der Stillstandszeiten und dem Ermöglichen des Betriebes solcher Anlagen unterhalb des Gefrierpunktes der verwendeten Reduktionsmittellösung bekannt. Hierzu weist die Einrichtung einen thermisch isolierten Vorratsbehälter für die Reduktionsmittellösung und eine daran angeschlossene Zuführungsleitung auf, die in einer Austrittsöffnung für die Flüssigkeit endet, wobei in der Zuführungsleitung ein Rückspül-Ventil vorgesehen ist, das mit einem unter Druck stehenden Gases beaufschlagbar ist. Der Vorratsbehälter und die Zuführungsleitung sind dabei mittels einer elektrischen Heizung, die einen Wärmetauscher mit Wärme versorgt, beheizbar.

Aus der DE 36 10 882 C2 ist eine doppelwirkende Kolbenpumpe zum Fördern von Flüssigkeit mit oder ohne Feststoffen, mit auf die Kolbenstange aufgesetzten mehrteiligen Kolben mit einer inneren und einer äußeren Packung am Kolbenumfang bekannt. An der Kolbenstange ist ein Kolbenboden angeordnet mit einem Abstreifring. Außerdem liegt zwischen den beiden Packungen eine Spannfeder. Der mehrteilige Kolben besteht aus einer zentrisch zur Spannfeder angeordneten Hülsenfeder, mit einer äußeren Hülse und einer inneren Hülse und einem zwischen beiden angeordneten elastischem Element, wobei die innere Hülse fest um Kolbenstangenteil positioniert ist und wobei die äußere Hülse mit dem Abstreifring Widerlager der äußeren Packung ist. Durch eine solche Anordnung wird eine frostsichere Pumpe geschaffen. Nach Ablassen oder Abziehen des Fördermediums aus den Pumpenräumen und bei Verbleib von Restmedium im Pumpeninneren erfährt die Pumpe dabei selbst bei starken Frost keine Zerstörung. Die auftretende Volumenvergrößerung durch Eisbildung im Pumpeninneren wird kompensiert durch die Ausdehnung der Hülsenfeder.

In der DE 101 29 592 A1 ist eine Bord-Reduktionsmittel-Abgabeanordnung für die Abgasleitung eines mit einem Verbrennungsmotor versehenen Kraftfahrzeuges beschrieben. Das System weist eine Düse zum Zerstäuben des Reduktionsmittels in die Abgasleitung auf, wobei ein Transferrohr mit der Düse zur Reduktionsmittelabgabe verbunden ist. Es ist ein Gehäuse mit einem Auslass vorgesehen, das mit dem Transferrohr gegenüber der Düse verbunden ist. Das Gehäuse besitzt ein Frontende, das eine Mischkammer bildet, sowie einen Hauptkörper mit Einlässen der Druckluft und Reduktionsmittel. Eine elektrisch betriebene Fluidzumesspumpe mit freiliegenden Spulen wird durch die Luft gekühlt, die zum Gehäuse durch den Drucklufteinlass geliefert wird, wobei die Fluidzumesseinrichtung einem Einlass besitzt, der mit dem Gehäusereduktionsmitteleinlass verbunden ist.

Der Erfindung liegt die Aufgabe zugrunde, eine Reduktionsmittelpumpe für eine Abgasnachbehandlungsanlage einer Brennkraftmaschine so auszugestalten, dass auch bei Temperaturen unterhalb des Gefrierpunktes des mittels der Pumpe zu fördernden Reduktionsmittels ein sicherer Betrieb der Abgasnachbehandlungsanlage gewährleistet ist.

Diese Aufgabe wird durch die Merkmale des Patentanspruches 1 gelöst.

Die der Erfindung zugrundeliegende Idee beruht darin, das den Pumpenkörper an seinen Enden abschließende Pumpeneinlassteil und/oder das Pumpenauslassteil zweigeteilt auszuführen, wobei jeweils ein Teil des Pumpeneinlassteiles und/oder des Pumpenauslassteiles mittels eines Federelementes gegenüber dem anderen Teil vorgespannt ist, so dass bei Überschreiten eines durch die Federkraft des Federelementes vorgegebenen Druckes eine Relativbewegung zwischen den beiden Teilen ausgeführt werden kann.

Dies hat den Vorteil, dass eine Volumenzunahme des sich innerhalb des Pumpenkörpers befindlichen Reduktionsmittels infolge Einfrieren aufgenommen und damit eine Beschädigung der Reduktionsmittelpumpe verhindert werden kann.

Weitere vorteilhafte Ausgestaltungen der Erfindung werden nachfolgend unter Bezugnahme auf die Zeichnung näher erläutert. Es zeigen:
- Figur 1: eine Blockdarstellung einer Brennkraftmaschine mit zugehöriger Abgasnachbehandlungsanlage, bei welcher die erfindungsgemäße Reduktionsmittelpumpe eingesetzt wird und
- Figur 2: eine schematische Darstellung der Reduktionsmittelpumpe

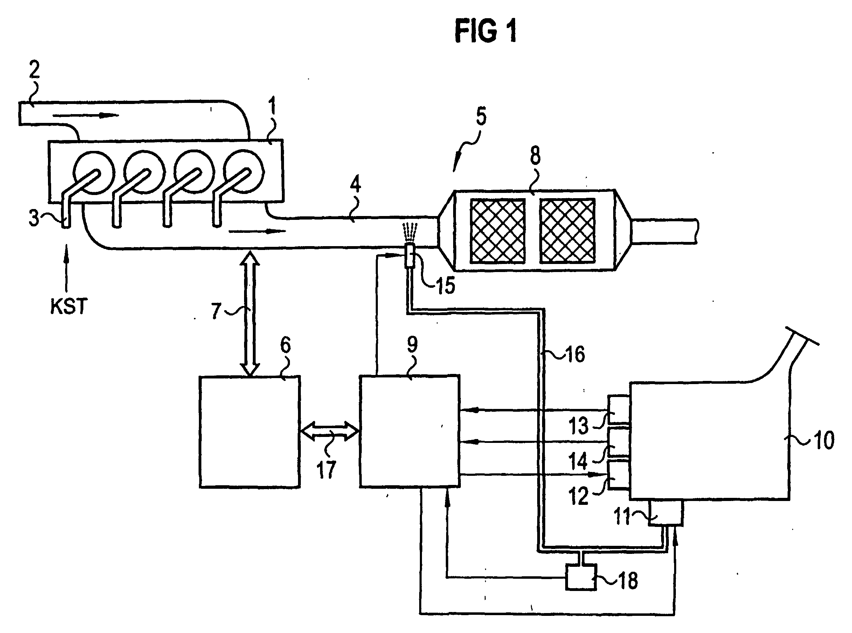

In Figur 1 ist in Form eines Blockschaltbildes sehr vereinfacht eine mit Luftüberschuß betriebene Brennkraftmaschine mit einer ihr zugeordneten Abgasnachbehandlungsanlage gezeigt. Dabei sind nur diejenigen Teile dargestellt, die für das Verständnis der Erfindung notwendig sind. Insbesondere ist auf die Darstellung des Kraftstoffkreislaufes verzichtet worden. In diesem Ausführungsbeispiel ist als Brennkraftmaschine eine Dieselbrennkraftmaschine gezeigt und als Reduktionsmittel zum Nachbehandeln des Abgases wird wässerige Harnstofflösung verwendet.

Der Brennkraftmaschine 1 wird über eine Ansaugleitung 2 die zur Verbrennung notwendige Luft zugeführt. Eine Einspritzanlage, die beispielsweise als Hochdruckspeichereinspritzanlage (Common rail) mit Einspritzventilen ausgebildet sein kann, die Kraftstoff KST direkt in die Zylinder der Brennkraftmaschine 1 einspritzen, ist mit dem Bezugszeichen 3 bezeichnet.

Das Abgas der Brennkraftmaschine 1 strömt über eine Abgasleitung 4 zu einer Abgasnachbehandlungsanlage 5 und von diesem über einen nicht dargestellten Schalldämpfer ins Freie.

Zur Steuerung und Regelung der Brennkraftmaschine 1 ist ein an sich bekanntes Motorsteuergerät 6 über eine hier nur schematisch dargestellte Daten - und Steuerleitung 7 mit der Brennkraftmaschine 1 verbunden. Über diese Daten - und Steuerleitung 7 werden Signale von Sensoren (z.B. Temperatursensoren für Ansaugluft, Ladeluft, Kühlmittel, Lastsensor, Geschwindigkeitssensor) und Signale für Aktoren (z.B. Einspritzventile, Stellglieder) zwischen der Brennkraftmaschine 1 und dem Motorsteuergerät 6 übertragen.

Die Abgasnachbehandlungsanlage 5 weist einen Reduktionskatalysator 8 auf, der mehrere in Reihe geschaltete, nicht näher bezeichnete Katalysatoreinheiten beinhaltet. Stromabwärts und/oder stromaufwärts des Reduktionskatalysators 8 kann zusätzlich je ein Oxidationskatalysator angeordnet sein (nicht dargestellt). Ferner ist ein Dosiersteuergerät 9 vorgesehen, das einem Reduktionsmittelvorratsbehälter 10 mit einer elektrisch ansteuerbaren Reduktionsmittelpumpe 11 zum Fördern des Reduktionsmittels zugeordnet ist.

Als Reduktionsmittel dient in diesem Ausführungsbeispiel wässerige Harnstofflösung, die in dem Reduktionsmittelvorratsbehälter 10 gespeichert ist. Dieser weist eine elektrische Heizeinrichtung 12 und Sensoren 13,14 auf, welche die Temperatur der Harnstofflösung bzw. den Füllstand im Reduktionsmittelvorratsbehälter 10 erfassen. An das Dosiersteuergerät 9 werden außerdem noch die Signale eines stromaufwärts des Reduktionskatalysators 8 angeordneten Temperatursensors und eines stromabwärts des Reduktionskatalysators 8 angeordneten Abgasmessaufnehmers, z.B. eines NOx-Sensors übergeben (nicht dargestellt).

Das Dosiersteuergerät 9 steuert ein elektromagnetisches Dosierventil 15 an, dem bedarfsweise über eine Zuführungsleitung 16 Harnstofflösung mit Hilfe der Reduktionsmittelpumpe 11 aus dem Reduktionsmittelvorratsbehälter 10 zugeführt wird. In die Zuführungsleitung 16 ist ein Drucksensor 18 eingefügt, der den Druck im Dosiersystem erfasst und ein entsprechendes Signal an das Dosiersteuergerät 9 abgibt. Die Einspritzung der Harnstofflösung mittels des Dosierventiles 15 erfolgt in die Abgasleitung 4 stromaufwärts des Reduktionskatalysators 8.

Im Betrieb der Brennkraftmaschine 1 strömt das Abgas in der eingezeichneten Pfeilrichtung durch die Abgasleitung 4.

Das Dosiersteuergerät 9 ist zum gegenseitigen Datentransfer über ein elektrisches Bussystem 17 mit dem Motorsteuergerät 6 verbunden. Über das Bussystem 17 werden die zur Berechnung der zu dosierenden Menge an Harnstofflösung relevanten Betriebsparameter, wie z.B. Maschinendrehzahl, Luftmasse, Kraftstoffmasse, Regelweg einer Einspritzpumpe, Abgasmassenstrom, Betriebstemperatur, Ladelufttemperatur, Spritzbeginn usw. dem Dosiersteuergerät 9 übergeben.

Ausgehend von diesen Parametern und den Messwerten für die Abgastemperatur und dem NOx-Gehalt berechnet das Dosiersteuergerät 9 die einzuspritzende Menge an Harnstofflösung und gibt über eine nicht näher bezeichnete elektrische Verbindungsleitung ein entsprechendes elektrisches Signal an das Dosierventil 15 ab. Durch die Einspritzung in die Abgasleitung 4 wird der Harnstoff hydrolysiert und durchmischt. In den Katalysatoreinheiten erfolgt die katalytische Reduktion des NOx im Abgas zu N₂ und H₂O.

Das Dosierventil 15 zum Einbringen der Harnstofflösung in die Abgasleitung 4 entspricht weitgehend einem üblichen Niederdruck-Benzineinspritzventil, das z.B. in eine mit einer Wandung der Abgasleitung 4 fest verbundenen Ventilaufnahmevorrichtung lösbar befestigt ist.

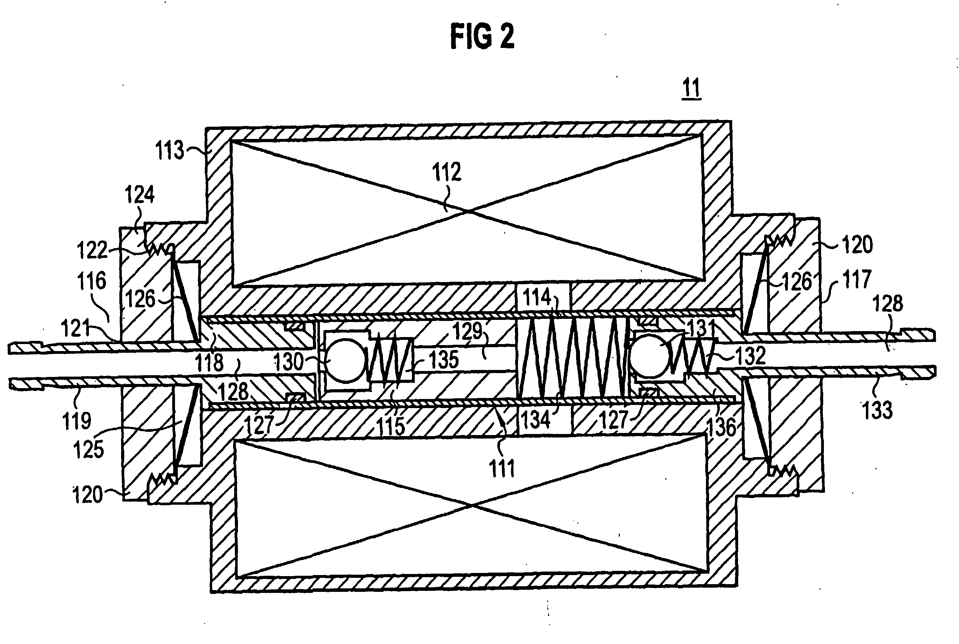

In Figur 2 ist in Schnittdarstellung eine Reduktionsmittelpumpe 11 zum Fördern von flüssigem Reduktionsmittel dargestellt. Diese Reduktionsmittelpumpe 11 ist als elektromagnetische Schwingkolbenpumpe, oft auch als Magnetkolbenpumpe bezeichnet, ausgebildet. Sie weist einen zylindrischen Pumpenkörper 111 und einen darüber geschobenen Elektromagneten 112 mit einer nicht näher bezeichneten Spulenwicklung auf. Die Spulenwicklung ist auf einem Spulenträger 113 aufgebracht. Der Pumpenkörper 111 besteht aus einem, bezogen auf seinen Durchmesser dünnwandigen Rohr 114, welches aus einem reduktionsmittelbeständigem Material, beispielsweise aus Edelstahl hergestellt ist. In dem Rohr 114 befindet sich ein durch Ansteuerung der Spulenwicklung des Elektromagneten 112 hin- und herbewegbarer Kolben 115.

Das Rohr 114 wird an einem seiner freien Enden mit einem zweistückig ausgeführten Pumpeneinlassteil 116 und dem anderen freien Ende mit einem ebenfalls zweistückig ausgeführten Pumpenauslassteil 117 abgeschlossen.

Das Pumpeneinlassteil 116 besteht aus einem einstückigen, in das Rohr 114 hineinragenden, dem Innendurchmesser des Rohres 114 angepaßtem, zylindrischen Grundkörper 118, der an seinem aus dem Rohr 114 ragenden Ende ein gegenüber dem Durchmesser des Grundkörpers 118 verjüngtes, zylindrisches Anschlußstück 119 aufweist und aus einem zylindrischen Verschlußteil 120 zum Fixieren des Grundkörpers 118 in dem Rohr 114. Das Anschlußstück 119 dient zum Anschluß einer Reduktionsmittelleitung, insbesondere einer Schlauchverbindung zum Reduktionsmittelbehälter 10 (Fig. 1).

Das Verschlußteil 120 weist eine zentrale Bohrung 121 zum Durchführen des Anschlußstückes 119 und an seiner Außenkontur ein Gewinde 122 auf, das mit einem Gegengewinde 123 an einem Ansatz 124 des Spulenträgers 113 zusammenwirkt. Der Ansatz 124 ist als ein von der Stirnseite des Spulenträgers 113 vorstehender Ring ausgebildet, dessen Innendurchmesser größer als der Durchmesser des Rohres 114 ist. Die axiale Länge des Ansatzes 124 ist dabei so bemessen, dass nach dem Einbringen des Grundkörpers 118 in das Rohr 114 und erfolgtem Verschrauben mittels des Verschlußteiles 120 zwischen Stirnseite des Spulenträgers 113 und der dieser Stirnseite zugewandten Seite des Verschlußteils 120 ein Hohlraum in Form einer zylindrischen Kammer 125 gebildet ist. In dieser Kammer 125 ist ein Federelement 126 derart angeordnet, dass bei verschraubtem Verschlußteil 120 der Grundkörper 118 federnd in dem Rohr 114 fixiert ist. Als Federelement 126 ist in der Figur 2 eine Tellerfeder dargestellt. Es können aber auch andere Federelemente wie beispielsweise Spiralfeder, Federscheibe oder ähnliches verwendet werden.

Der Grundkörper 118 weist an seinem Umfang eine, nicht näher bezeichnete, radiale Nut zur Aufnahme eines Radialdichtelementes 127 auf. Vorzugsweise wird als Radialdichtelement 127 eine sogenannte O-Ringdichtung verwendet.

Der Grundkörper 118 und das daran angeformte Anschlußstück weisen einen durchgehenden, zentrischen Kanal 128 auf, in dem Reduktionsmittel zu dem Kolben 115 geleitet wird. Der Kolben weist ebenfalls einen zentrischen Kanal 129 auf, in dessen Verlauf an der dem Pumpeneinlassteil 116 zugewandten Seite eine Kammer 135 ausgebildet ist, in der ein Kolbenrückschlagventil 130 angeordnet ist. Dieses Kolbenrückschlagventil 130 besteht im dargestellten Fall in herkömmlicher Weise aus einer Kugel und einem auf die Kugel einwirkende Federelement, so dass der Kanal 129 bedarfsweise geschlossen werden kann.

Das Pumpenauslassteil 117 ist im wesentlichen wie das Pumpeneinlassteil 116 aufgebaut, so dass an dieser Stelle nur auf den vorhandenen Unterschied eingegangen wird. Der zylindrische Grundkörper 136 des Pumpenauslassteiles 117 weist im Verlauf seines zentralen Kanals 128 an der dem Kolben 115 zugewandten Seite eine Kammer 131 auf, in der ein Auslassrückschlagventil 132 angeordnet ist. Dieses Auslassrückschlagventil 132 besteht im dargestellten Fall in herkömmlicher Weise aus einer Kugel und einem auf die Kugel einwirkende Federelement, so dass der Kanal 128 bedarfsweise geschlossen werden kann.

Das an dem freien Ende des Grundkörpers des Pumpenauslassteiles 117 angeformte Anschlussstück 133 dient zum Anschluss einer Reduktionsmittelleitung, insbesondere einer Schlauchverbindung, die mittelbar oder unmittelbar zum Dosierventil 15 (Fig.1) führt.

In dem Rohr 114 ist im Zwischenraum, welcher von der dem Pumpenauslassteil 117 zugewandten Stirnfläche des Kolbens 115 und der dem Kolben 115 zugewandten Stirnfläche des Grundkörpers des.Pumpenauslassteiles 117 begrenzt wird, ein Federelement 134 vorgesehen, das den Kolben 115 in Richtung Pumpeneinlassteil 116 vorspannt.

Durch eine solche Anordnung wird die Schwingkolbenpumpe 11 vor der Zerstörung aufgrund eines zu hohen Überdruckes beim Einfrieren des Reduktionsmittels und damit einhergehender Volumenzunahme des Reduktionsmittels sicher geschützt. Bei einem definierten Maximaldruck wird der Grundkörper 118 gegen die Federkraft des Federelementes 126 nach außen gedrückt. Das Federelement 126 sorgt für eine definierte Kraft , welche dem Produkt aus Maximaldruck -der beispielsweise durch Versuche ermittelt wird- und dem Querschnitt des Rohres 114 entspricht. Dadurch kann die Volumenzunahme des in der Schwingkolbenpumpe 11 befindlichen Reduktionsmittels durch die axiale Verschiebung des Grundkörpers 118 aufgenommen werden. Die radiale Abdichtung zwischen Grundkörper 118 und Rohr 114 mittels eines O-Dichtringes lässt diese axiale Verschiebung zu.

Anhand der Figur 2 wurde ein Ausführungsbeispiel erläutert, bei dem Pumpeneinlass und Pumpenauslass federnd gelagert sind. Es ist aber auch möglich, nur eine Seite der Pumpe und dann bevorzugt den Pumpeneinlass federnd zu lagern. Das Pumpenauslassteil 117 könnte dann einstückig ausgeführt sein, d. h. Grundkörper und Verschlußteil sind als ein einziges Teil mit dem Spulenträger verschraubt.

Aufgrund des Arbeitsprinzips der beschriebenen Schwingkolbenpumpe (Hubbewegung des Kolbens, nicht zuverlässig selbstansaugend) ist die Pumpe unterhalb des Niveaus des Reduktionsmittelbehälters angeordnet (Fig.1).

## Patentansprüche

1. Reduktionsmittelpumpe zum Fördern von flüssigem Reduktionsmittel zu einer Abgasnachbehandlungsanlage einer Brennkraftmaschine mit
- einem zylindrischen Pumpenkörper (111),
- einem, den Pumpenkörper (111) umfassenden Spulenträger (113) zur Aufnahme eines Elektromagneten (112),
- einem, im Pumpenkörper (111) durch Ansteuern des Elektromagneten (112) eine Axialbewegung ausführenden Kolben (115),
- einem den Pumpenkörper (111) an seinen Enden abschließenden Pumpeneinlassteil (116) und Pumpenauslassteil (117), wobei das Pumpeneinlassteil (116) und/oder das Pumpenauslassteil (117) zweigeteilt ausgeführt ist, wobei
- jeweils ein Teil (118,136) des Pumpeneinlassteiles (116) und/oder des Pumpenauslassteiles (117) mittels eines Federelementes (126) gegenüber einem Verschlussteil (120) vorgespannt ist, so dass bei Überschreiten eines durch die Federkraft des Federelementes (126) vorgegebenen Druckes eine Relativbewegung zwischen den beiden Teilen (118,136;120) ausgeführt werden kann.

2. Reduktionsmittelpumpe nach Anspruch 1, **dadurch gekennzeichnet, dass** das Pumpeneinlassteil (116) und/oder das Pumpenauslassteil (117) aus einem in den Pumpenkörper (111) hineinragenden zylindrischen Grundkörper (118, 136) und einem Verschlussteil (120) besteht.

3. Reduktionsmittelpumpe nach Anspruch 2, **dadurch gekennzeichnet, dass** der Grundkörper (118,136) verschieblich in dem Pumpenkörper (111) gelagert ist und das Verschlussteil (120) fest mit dem Spulenträger (113) verbunden ist.

4. Reduktionsmittelpumpe nach Anspruch 3, **dadurch gekennzeichnet, dass** zwischen den sich zugewandten Stirnseiten des Grundkörpers (118,136) und des Verschlussteiles (120) das Federelement (126) angeordnet ist.

5. Reduktionsmittelpumpe nach Anspruch 1 oder 4, **dadurch gekennzeichnet, dass** das Federelement (126) als Tellerfeder oder als Federscheibe oder als Spiralfeder ausgebildet ist.

6. Reduktionsmittelpumpe nach Anspruch 1 oder 3, **dadurch gekennzeichnet, dass** das Verschlussteil (120) mit dem Spulenträger (113) verschraubt ist.

7. Reduktionsmittelpumpe nach einem der Ansprüche 2-4, **dadurch gekennzeichnet, dass** der Grundkörper (118,136) ein Anschlussstück (119) zur Aufnahme einer Reduktionsmittelleitung aufweist.

8. Reduktionsmittelpumpe nach einem der Ansprüche 2-4, **dadurch gekennzeichnet, dass** der Grundkörper (118,136) an seinem Umfang eine Nut aufweist, in der ein Radialdichtelement (127) eingelegt ist, welches die Dichtigkeit bei einer axialen Bewegung des Grundkörpers (118,136) in dem Pumpenkörper (111) sicherstellt.

## Claims

1. Reducing agent pump for conveying fluid reducing agent to an exhaust gas post-treatment unit of an internal combustion engine having
- a cylindrical pump body (111),
- a coil carrier (113) embracing the pump body (111) for the accommodation of an electromagnet (112),
- a plunger (115) executing an axial movement in the pump body (111) as a result of activation of the electromagnet (112),
- a pump inlet portion (116) and pump outlet portion (117) closing the pump body (111) at its ends, with the pump inlet portion (116) and/or the pump outlet portion (117) being constructed so that it is divided into two, wherein
- a respective portion (118, 136) of the pump inlet portion (116) and/or the pump outlet portion (117) is pre-tensioned in relation to a closure portion (120) by means of a spring element (126) so that when a pressure that is predetermined by the spring force of the spring element (126) is exceeded, a relative movement can be executed between the two parts (118, 136; 120).

2. Reducing agent pump according to claim 1, **characterised in that** the pump inlet portion (116) and/or the pump outlet portion (117) consists of a cylindrical base body (118, 136) that projects into the pump body (111) and of a closure portion (120).

3. Reducing agent pump according to claim 2, **characterised in that** the base body (118, 136) is mounted in a displaceable manner in the pump body (111), and the closure portion (120) is fixedly connected to the coil carrier (113).

4. Reducing agent pump according to claim 3, **characterised in that** the spring element (126) is arranged between the facing end faces of the base body (118, 136) and the closure portion (120).

5. Reducing agent pump according to claim 1 or 4, **characterised in that** the spring element (126) is formed as a plate spring or as a spring washer or as a spiral spring.

6. Reducing agent pump according to claim 1 or 3, **characterised in that** the closure portion (120) is screwed to the coil carrier (113).

7. Reducing agent pump according to one of claims 2-4, **characterised in that** the base body (118, 136) has a connection piece (119) for the accommodation of a reducing agent line.

8. Reducing agent pump according to one of claims 2-4, **characterised in that** on its periphery the base body (118, 136) has a groove in which a radial sealing element (127) is inserted that guarantees imperviousness in the case of an axial movement of the base body (118, 136) in the pump body (111).

## Revendications

1. Pompe d'agent réducteur pour véhiculer de l'agent réducteur liquide à un système de post-traitement des gaz d'échappement d'un moteur à combustion interne comprenant :
- un corps (111) de pompe cylindrique,
- un porte-bobine (113), entourant le corps (111), de réception d'un électroaimant (112),
- un piston (115) exécutant un déplacement axial dans le corps (111) de pompe par commande de l'électroaimant (112),
- une partie (116) d'admission de pompe fermant l'extrémité du corps (111) de pompe et une partie (117) d'évacuation de pompe, la partie (116) d'admission de pompe et/ou la partie (117) d'évacuation étant réalisée en deux pièces, dans laquelle
- chaque pièce (118, 136) de la partie (116) d'admission de pompe et/ou de la partie (117) d'évacuation de pompe est mise sous tension préalable par rapport à une pièce (120) de fermeture, au moyen d'un élément (126) à ressort, de sorte que, lorsqu'une pression prescrite par la force élastique de l'élément (126) à ressort est dépassée, un déplacement relatif peut s'effectuer entre les deux pièces (118, 136; 120).

2. Pompe d'agent réducteur suivant la revendication 1, **caractérisée en ce que** la partie (116) d'admission de pompe et/ou la partie (117) d'évacuation de pompe est constituée d'un corps (118, 136) de base cylindrique pénétrant dans le corps (111) de pompe.

3. Pompe d'agent réducteur suivant la revendication 2, **caractérisée en ce que** le corps (118, 136) de base est monté coulissant dans le corps (111) de pompe et **en ce que** la pièce (120) de fermeture est reliée rigidement au porte-bobine (113).

4. Pompe d'agent réducteur suivant la revendication 3, **caractérisée en ce que** l'élément (126) à ressort est disposé entre les faces frontales tournées l'une vers l'autre du corps (118, 136) de base et de la pièce (120) de fermeture.

5. Pompe d'agent réducteur suivant la revendication 1 ou 4, **caractérisée en ce que** l'élément (126) à ressort est constitué en ressort à disque ou en ressort plat ou en ressort spirale.

6. Pompe d'agent réducteur suivant la revendication 1 ou 3, **caractérisée en ce que** la pièce (120) de fermeture est vissée avec le porte-bobine (113).

7. Pompe d'agent réducteur suivant l'une des revendications 2 à 4, **caractérisée en ce que** le corps de base (118, 136) a un raccord (119) de réception d'un conduit pour l'agent réducteur.

8. Pompe d'agent réducteur suivant l'une des revendications 2 à 4, **caractérisée en ce que** le corps de base (118, 136) a sur son pourtour une gorge dans laquelle est inséré un élément (127) d'étanchéité radial, qui assure l'étanchéité lors d'un déplacement axial du corps de base (118, 136) dans le corps (111) de pompe.
